# EUROPEAN PATENT APPLICATION

(11) **EP 3 392 280 A2**
(43) Date of publication of application: **24.10.2018**
(21) Application number: 18167197.5
(22) Date of filing: 13.04.2018
(51) Int. Cl.: C08F 236/10, B60C 1/00, C08K 3/04, C08L 9/06

(54) **RUBBER COMPOSITION FOR TYRE TREAD**

(30) Priority: 19.04.2017 JP 2017083194
(71) Applicant: Sumitomo Rubber Industries, Ltd., Kobe-shi, Hyogo 651-0072 (JP)
(72) Inventor: KATO, Fumiya, Kobe-shi,, Hyogo 651-0072 (JP)
(74) Representative: TBK

(57) **Abstract**

There is provided a tire being excellent in abrasion resistance. The tire comprises a tread composed of a rubber composition for the tread, and the rubber composition comprises 70 to 130 parts by mass of carbon black having a nitrogen adsorption specific surface area of 100 to 290 m²/g based on 100 parts by mass of a rubber component comprising a linear styrene-butadiene rubber having a styrene content of 35 to 45% by mass, a vinyl content of 35 to 45% by mass and a weight-average molecular weight of 1,000,000 to 1,400,000.

## Description

### TECHNICAL FIELD

The present invention relates to a tire comprising a tread composed of a specified rubber composition for a tread.

### BACKGROUND OF THE INVENTION

Generally excellent abrasion resistance is demanded for a rubber composition to be used on a tire tread. Examples of factors having influence on abrasion resistance of a rubber composition include a glass transition temperature, a hardness, a filler distribution property and the like of the rubber composition. For example, in JP 2004-137463 A, a technology of improving abrasion resistance by use of a rubber component having a low glass transition temperature is described, but there is a room for improvement of abrasion resistance.

### SUMMARY OF THE INVENTION

An object of the present invention is to provide a tire being excellent in abrasion resistance.

The present invention relates to a tire comprising a tread composed of a rubber composition for a tread, the rubber composition comprises 70 to 130 parts by mass of carbon black having a nitrogen adsorption specific surface area of 100 to 290 m²/g based on 100 parts by mass of a rubber component comprising a linear styrene-butadiene rubber having a styrene content of 35 to 45% by mass, a vinyl content of 35 to 45% by mass and a weight-average molecular weight of 1,000,000 to 1,400,000.

It is preferable that a viscosity of a toluene solution of 5% by mass of the linear styrene-butadiene rubber is 350 mPa·s or more.

A tire according to the present invention comprising a tread composed of a specific rubber composition for a tread is excellent in abrasion resistance.

### DETAILED DESCRIPTION

A tire according to one embodiment of the present disclosure is featured by comprising a tread composed of a rubber composition for a tread comprising 70 to 130 parts by mass of carbon black having a nitrogen adsorption specific surface area of 100 to 290 m²/g based on 100 parts by mass of a rubber component comprising a linear styrene-butadiene rubber having a styrene content of 35 to 45% by mass, a vinyl content of 35 to 45% by mass and a weight-average molecular weight of 1,000,000 to 1,400,000.

In the rubber composition according to this embodiment, a linear styrene-butadiene rubber (a linear SBR) having a styrene content of 35 to 45% by mass, a vinyl content of 35 to 45% by mass and a weight-average molecular weight of 1,000,000 to 1,400,000 and carbon black having a nitrogen adsorption specific surface area of 100 to 290 m²/g are used in combination, and it is considered that by using the linear SBR having less branches, an interaction thereof with carbon black becomes large and as a result, abrasion resistance is enhanced.

The linear SBR is a linear styrene-butadiene rubber having a styrene content of 35 to 45% by mass, a vinyl content of 35 to 45% by mass, and a weight-average molecular weight of 1,000,000 to 1,400,000. A viscosity (Tcp) of a toluene solution of 5% by mass of the linear SBR in this embodiment is preferably 350 mPa·s or more, more preferably 370 mPa·s or more, further preferably 390 mPa·s or more. The viscosity of a 5% by mass toluene solution can be defined as a value determined by dissolving 2.28 g of the rubber component in 50 mL of toluene and then measuring the viscosity of the solution at 25°C using a standard liquid for viscometer calibration (JIS Z8809), with a Cannon-Fenske viscometer No. 400.

In the linear SBR, the styrene content is 35% by mass or more, preferably 37% by mass or more. When the styrene content is less than 35% by mass, peak grip performance tends to deteriorate. Further, the styrene content is 45% by mass or less, preferably 43% by mass or less. When the styrene content exceeds 45% by mass, grip performance at an initial stage of running tends to deteriorate.

In the linear SBR, the vinyl content is 35% by mass or more, preferably 37% by mass or more. When the vinyl content is less than 35% by mass, peak grip performance tends to deteriorate. Further, the vinyl content is 45% by mass or less, preferably 43% by mass or less. When the vinyl content exceeds 45% by mass, grip performance at an initial stage of running tends to deteriorate.

The weight-average molecular weight of the linear SBR is 1,000,000 or more, preferably 1,050,000 or more, more preferably 1,100,000 or more. When the weight-average molecular weight is less than 1,000,000, abrasion resistance tends to deteriorate. The weight-average molecular weight of the linear SBR is 1,400,000 or less, preferably 1,350,000 or less, more preferably 1,300,000 or less. When the weight-average molecular weight exceeds 1,400,000, abrasion resistance is improved, but grip performance tends to deteriorate significantly.

The SBR is not particularly limited. Examples of the SBR include a solution-polymerized SBR (S-SBR), an emulsion-polymerized SBR (E-SBR), a modified SBR thereof (modified S-SBR, modified E-SBR) and the like. Examples of the modified SBR include an end-modified and/or main-chain-modified SBR, a modified SBR coupled with a tin or silicon compound or the like (such as a condensate, one having a branch structure, etc.), a hydrogenated SBR (hydrogenated S-SBR, hydrogenated E-SBR) and the like. Among these, S-SBR is preferable.

The content of SBR is preferably 80% by mass or more, more preferably 90% by mass or more, further preferably 100% by mass in the rubber component from the viewpoint of dry grip performance and abrasion resistance.

The rubber component of this embodiment may comprise a rubber component (other rubber components) other than the linear SBR. Examples of the other rubber components include isoprene rubbers including natural rubber (NR) and polyisoprene rubber (IR); diene-based rubbers other than SBR and butyl-based rubbers such as SBR other than the linear SBR, butadiene rubber (BR), styrene-isoprene-butadiene rubber (SIBR), chloroprene rubber (CR) and acrylonitrile butadiene rubber (NBR) and the like. These rubber components may be used alone or may be used in combination of two or more thereof. Among these, NR and BR are preferably used as the other rubber components from the viewpoint of maintaining fuel efficiency, abrasion resistance, durability and wet grip performance in a balanced manner.

The carbon black is one having a nitrogen adsorption specific surface area of 100 to 290 m²/g. It is considered that by combination use of the linear SBR and the carbon black, an interaction becomes large and abrasion resistance is improved.

The nitrogen adsorption specific surface area (N₂SA) of carbon black is preferably 100 m²/g or more, more preferably 105 m²/g or more, further preferably 110 m²/g or more. When the N₂SA is less than 100 m²/g, abrasion resistance tends to deteriorate. Further, the N₂SA of carbon black is 290 m²/g or less, preferably 270 m²/g or less, more preferably 250 m²/g or less. Herein, the N₂SA of carbon black is a value measured according to JIS K 6217-2: 2001.

The content of carbon black is not less than 70 parts by mass, preferably not less than 80 parts by mass based on 100 parts by mass of the rubber component. When the content of carbon black is less than 70 parts by mass, abrasion resistance tends to deteriorate. Further, the content of carbon black is not more than 130 parts by mass, preferably not more than 120 parts by mass, more preferably not more than 110 parts by mass based on 100 parts by mass of the rubber component. When the content of carbon black exceeds 130 parts by mass, abrasion resistance is improved, but grip performance tends to deteriorate.

In addition to the above-mentioned components, other components commonly used in the manufacturing of the rubber composition, for example, reinforcing fillers other than carbon black, silane coupling agents, softening agents, stearic acid, zinc oxide, various antioxidants, waxes, vulcanizing agents, vulcanization accelerators and the like can be optionally compounded in the rubber composition.

Examples of the reinforcing fillers other than carbon black include silica, calcium carbonate, alumina, clay, talc and the like. From the viewpoint of wet grip performance, it is preferable that the rubber composition comprises silica. From a point of maintaining reinforceability by compounding carbon black, it is preferable that the rubber composition does not comprise reinforcing fillers other than carbon black.

Silica is not limited particularly, and examples thereof include silica prepared by a dry method (anhydrous silica), silica prepared by a wet method (hydrous silica) and the like. In particular, hydrous silica prepared by a wet method is preferred for the reason that many silanol groups are contained.

A nitrogen adsorption specific surface area (N₂SA) of silica is preferably 80 m²/g or more, more preferably 100 m²/g or more, further preferably 110 m²/g or more. When the N₂SA of silica is less than 80 m²/g, there is a tendency that elongation at break decreases and durability deteriorates. The N₂SA of silica is preferably 250 m²/g or less, more preferably 235 m²/g or less, further preferably 220 m²/g or less. When the N₂SA of silica exceeds 250 m²/g, there is a tendency that fuel efficiency and processability (sheet reliability) deteriorate. The N₂SA of silica is a value measured by the BET method in accordance with ASTM D3037-81.

When the rubber composition comprises silica, the content thereof is preferably not less than 5 parts by mass, more preferably not less than 7 parts by mass based on 100 parts by mass of the rubber component for the reason that an effect to be obtained by compounding silica is sufficient. Further, from the viewpoint of processability, the content of silica is preferably not more than 40 parts by mass, more preferably not more than 35 parts by mass based on 100 parts by mass of the rubber component.

Silica is preferably used in combination with a silane coupling agent. The silane coupling agent may be any silane coupling agents conventionally used in conjunction with silica in the rubber industry. Examples of the silane coupling agent include sulfide-based silane coupling agents such as bis(3-triethoxysilylpropyl) disulfide and bis(3-triethoxysilylpropyl) tetrasulfide; mercapto-based silane coupling agents such as 3-mercaptopropyltrimethoxysilane and NXT-Z100, NXT-Z45, NXT and the like manufactured and sold by Momentive Performance Materials (silane coupling agents having a mercapto group); vinyl-based silane coupling agents such as vinyltriethoxysilane; amino-based silane coupling agents such as 3-aminopropyltriethoxysilane; glycidoxy-based silane coupling agents such as y-glycidoxypropyltriethoxysilane; nitro-based silane coupling agents such as 3-nitropropyltrimethoxysilane; and chloro-based silane coupling agents such as 3-chloropropyltrimethoxysilane. These silane coupling agents may be used alone or may be used in combination of two or more thereof.

When the rubber composition comprises silica, the content thereof is preferably 4.0 parts by mass or more, more preferably 6.0 parts by mass or more based on 100 parts by mass of silica for the reason that sufficient effects of improving dispersibility of fillers and decreasing a viscosity can be obtained. The content of the silane coupling agent is preferably 12 parts by mass or less, more preferably 10 parts by mass or less based on 100 parts by mass of silica. When the content of the silane coupling agent exceeds 12 parts by mass, sufficient coupling effect and filler dispersing effect cannot be obtained and the reinforcing property deteriorates.

The softening agent is not particularly limited as far as it is one conventionally used in rubber compositions for tires. Examples thereof include an oil, an adhesive resin and a liquid polymer.

Examples of the oil include mineral oil such as naphthenic oil, aromatic oil, process oil and paraffinic oil.

When oil is compounded, the content of the oil is preferably 5 parts by mass or more, more preferably 15 parts by mass or more based on 100 parts by mass of the diene rubber component for the reason that an effect obtained by compounding the oil is sufficient. Further, the content of the oil is preferably 50 parts by mass or less, more preferably 45 parts by mass or less based on 100 parts by mass of the diene rubber component from the viewpoint of abrasion resistance.

Examples of the adhesive resin include resins such as aromatic petroleum resins which have been commonly used for rubber compositions for tires. Examples of the aromatic petroleum resins include a phenolic resin, a coumarone-indene resin, a terpene resin, a styrene resin, an acrylic resin, a rosin resin, a dicyclopentadiene resin (DCPD resin) and the like. Examples of the phenolic resin include Koreshin (available from BASF Japan), TACKIROL (available from Taoka Chemical Co., Ltd.) and the like. Examples of the coumarone-indene resin include ESCRONE (available from Nippon Steel & Sumikin Chemical Co., Ltd.), Neo Polymer (available from JXTG Nippon Oil & Energy Corporation) and the like. Examples of the styrene resin include SYLVATRAXX 4401 (available from Arizona Chemical Company) and the like. Examples of the terpene resin include TR7125 (available from Arizona Chemical Company), TO125 (available from Yasuhara Chemical Co., Ltd.) and the like. These adhesive resins may be used alone or may be used in combination of two or more thereof. Among these, it is preferable to use a phenolic resin, a coumarone-indene resin, a terpene resin and an acrylic resin from the viewpoint of excellent grip performance during running.

When the rubber composition comprises the adhesive resin, the content thereof is preferably not less than 20 parts by mass, more preferably not less than 25 parts by mass, further preferably not less than 30 parts by mass based on 100 parts by mass of the rubber component from the viewpoint of grip performance during running. Further, from the viewpoint of processability, the content of the adhesive resin is preferably not more than 90 parts by mass, more preferably not more than 80 parts by mass based on 100 parts by mass of the rubber component.

Examples of the liquid polymer include a liquid styrene butadiene polymer, a liquid butadiene polymer, a liquid isoprene polymer, a liquid styrene isoprene polymer and the like. Among these, a styrene butadiene polymer is preferable because durability and grip performance can be improved in good balance.

The weight-average molecular weight of the styrene butadiene polymer is preferably 30,000 or less, more preferably 10,000 or less from the viewpoint of excellent abrasion resistance and grip performance. The lower limit of the weight-average molecular weight is not particularly limited and is preferably 4,000 or more, from the viewpoint of a balance between abrasion resistance and grip performance.

The styrene butadiene polymer is preferably a hydrogenated styrene butadiene polymer, to which hydrogen is added, from the viewpoint of abrasion resistance and grip performance. The hydrogenation rate of the styrene butadiene polymer is preferably 50% or more.

The antioxidant is not particularly limited, and any antioxidants conventionally used in a field of rubbers can be used. Examples of the antioxidant include quinoline-based antioxidants, quinone-based antioxidants, phenol-based antioxidants, phenylenediamine-based antioxidants and the like.

When the antioxidant is contained, the content thereof is preferably 0.5 part by mass or more, more preferably 0.8 part by mass or more based on 100 parts by mass of the rubber component. In addition, the content of the antioxidant is preferably 2.0 parts by mass or less, more preferably 1.5 parts by mass or less, further preferably 1.2 parts by mass or less based on 100 parts by mass of the rubber component from the viewpoint of dispersibility of the filler and the like, elongation at break and kneading efficiency.

Examples of the vulcanizing agent include sulfur, sulfur-containing compounds such as caprolactam disulfide and the like. Examples of sulfur as the vulcanizing agent include powdered sulfur, precipitated sulfur, colloidal sulfur, insoluble sulfur, oil-treated sulfur and the like. These vulcanizing agents may be used alone or may be used in combination of two or more thereof.

When the vulcanizing agent is contained, the content thereof is preferably 0.5 part by mass or more, more preferably 0.6 part by mass or more based on 100 parts by mass of the rubber component from the viewpoint of a good vulcanization reaction. The content of the vulcanizing agent is preferably 3 parts by mass or less, more preferably 2 parts by mass or less based on 100 parts by mass of the rubber component from the viewpoint of grip performance and abrasion resistance.

Examples of the vulcanization accelerator include guanidine-based vulcanization accelerators, aldehyde-amine-based vulcanization accelerators, aldehyde-ammonia-based vulcanization accelerators, thiazole-based vulcanization accelerators, sulfenamide-based vulcanization accelerators, thiourea-based vulcanization accelerators, thiuram-based vulcanization accelerators, dithiocarbamate-based vulcanization accelerators, xanthate-based vulcanization accelerators and the like. Among these, the vulcanization accelerator is preferably a vulcanization accelerator having a benzothiazolyl sulfide group for the reason that an effect of the present disclosure can be obtained suitably.

Examples of the vulcanization accelerator having the benzothiazolyl sulfide group include sulfenamide-based vulcanization accelerators such as N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), N,N-diisopropyl-2-benzothiazolesulfenamide, N,N-di(2-ethylhexyl)-2-benzothiazolylsulfenamide (BEHZ), N,N-di(2-methylhexyl)-2-benzothiazolylsulfenamide (BMHZ) and N-ethyl-N-t-butylbenzothiazole-2-sulfenamide (ETZ); N-tert-butyl-2-benzothiazolylsulfenimide (TBSI); di-2-benzothiazolyl disulfide (DM); and the like.

When the vulcanization accelerator is contained, the content thereof is preferably 0.5 part by mass or more, more preferably 1.0 part by mass or more based on 100 parts by mass of the rubber component from the viewpoint of securing sufficient vulcanization rate. Further the content of the vulcanization accelerator is preferably 10 parts by mass or less, more preferably 5 parts by mass or less based on 100 parts by mass of the rubber component from the viewpoint of inhibiting blooming.

The rubber composition for a tread of the present embodiment can be prepared by a usual method. For example, the rubber composition can be prepared by a method of kneading each of the above-mentioned components except the vulcanizing agent and the vulcanization accelerator using a well-known kneading apparatus which is generally used in rubber industries such as a Banbury mixer, a kneader or an open roll, and then adding the vulcanizing agent and the vulcanization accelerator, followed by further kneading a mixture and conducting vulcanization, or the like method.

The tire of the present embodiment can be produced by a usual method using the above-mentioned rubber composition for a tread. Namely the rubber composition prepared by compounding the above-mentioned compounding agents with the rubber component as required is extrusion-processed into a shape of a tread, and further, the obtained extruded product is laminated with other tire parts to form an unvulcanized tire on a tire molding machine by a usual forming method. The tire can be produced by heating and pressurizing this unvulcanized tire in a vulcanizer.

In the above, one embodiment of the present disclosure is described. The present disclosure is not particularly limited to the above embodiment. It should be noted that the above embodiment mainly describes an disclosure having the following constitutions.

(1) A tire comprising a tread composed of a rubber composition for the tread, the rubber composition comprising 70 to 130 parts by mass, preferably 80 to 120 parts by mass of carbon black having a nitrogen adsorption specific surface area of 100 to 290 m²/g, preferably 105 to 270 m²/g, more preferably 110 to 250 m²/g based on 100 parts by mass of a rubber component comprising a linear styrene-butadiene rubber having a styrene content of 35 to 45% by mass, preferably 37 to 43% by mass, a vinyl content of 35 to 45% by mass, preferably 37 to 43% by mass and a weight-average molecular weight of 1,000,000 to 1,400,000, preferably 1,050,000 to 1,350,000, more preferably 1,100,000 to 1,300,000.

(2) The tire of (1), wherein a viscosity of a toluene solution of 5% by mass of the linear styrene-butadiene rubber is 350 mPa·s or more, preferably 370 mPa·s or more, more preferably 390 mPa·s or more.

### EXAMPLES

The present disclosure is described in detail based on Examples. The present disclosure is not limited to these Examples.

Various chemicals used in Examples and Comparative Examples are shown below.
SBR1: Linear SBR prepared by a manufacturing method for SBR1 described below, styrene content: 40% by mass, vinyl content: 40% by mass, weight-average molecular weight: 1,200,000, viscosity of 5% by mass toluene solution: 390 mPa·s
SBR2: Branched SBR prepared by a manufacturing method for SBR2 described below, styrene content: 40% by mass, vinyl content: 40% by mass, weight-average molecular weight: 1,200,000, viscosity of 5% by mass toluene solution: 340 mPa·s
Carbon Black 1: N₂SA: 231 m²/g
Carbon Black 2: N₂SA: 280 m²/g
Carbon Black 3: N₂SA: 80 m²/g
Naphthenic oil: available from JXTG Nippon Oil & Energy Corporation
Liquid polymer: Liquid styrene-butadiene polymer, styrene content of 50% by mass, weight-average molecular weight: 6,000, hydrogenation rate: 70%
Antioxidant: Nocrac 6C manufactured by Ouchi Shinko Chemical Industrial Co., Ltd. (N-(1,3-dimethylbutyl)-N'-phenyl-p-phenylenediamine)
Wax: Ozoace 355 manufactured by Nippon Seiro Co., Ltd.
Stearic acid: Bead stearic acid TSUBAKI manufactured by NOF Corporation
Zinc oxide: Class 2 zinc oxide manufactured by MITSUI MINING & SMELTING CO., LTD
Vulcanizing agent 1: HK200-5 manufactured by Hosoi Chemical Industry Co., Ltd. (powdered sulfur containing 5% oil)
Vulcanizing agent 2: Rhenogran CLD80 manufactured by Rhein Chemie Corporation (caprolactamdisulfide)
Vulcanization accelerator 1: NOCCELER DM manufactured by Ouchi Shinko Chemical Industrial Co., Ltd. (di-2-benzothiazolyl disulfide)
Vulcanization accelerator 2: NOCCELER TOT-N manufactured by Ouchi Shinko Chemical Industrial Co., Ltd. (tetrakis(2-ethylhexyl)thiuram disulfide)

Various chemicals used in the manufacturing methods for SBR1 and SBR2 are as follows.
Cyclohexane: manufactured by Kanto Chemical Co., Inc.
Pyrrolidine: manufactured by Kanto Chemical Co., Inc.
Divinylbenzene: manufactured by Sigma-Aldrich Corporation
1.6M n-butyllithium hexane solution: manufactured by Kanto Chemical Co., Inc.
Isopropanol: manufactured by Kanto Chemical Co., Inc.
Styrene: manufactured by Kanto Chemical Co., Inc.
Butadiene: 1,3-butadiene manufactured by Takachiho Chemical Industrial Co., Ltd.
Tetramethylethylenediamine: N, N, N', N'-tetramethylethylenediamine, manufactured by Kanto Chemical Co., Inc.

### <Production Method of SBR1>

A 3 L pressure-resistant stainless-steel vessel, fully nitrogen-purged, was charged with 1,000 g of hexane, 60 g of butadiene, 40 g of styrene, and 20 mmol of TMEDA. Subsequently, a small amount of n-butyllithium/hexane solution was put into the polymerization vessel as a scavenger for previously neutralizing impurities that would affect deactivation of a polymerization initiator. Further, an n-butyllithium/hexane solution (in which the content of n-butyllithium was 0.083 mmol) was added thereto, followed by polymerization reaction for three hours at 50°C. Then, 1,500 mL of 1M isopropanol/hexane solution was added dropwise to the resulting mixture to terminate the reaction. Thereafter, the polymerization solution was evaporated for 24 hours at room temperature and further dried for 24 hours at 80°C under reduced pressure, thereby producing an SBR1.

### <Production Method of SBR2>

A 3 L pressure-resistant stainless-steel vessel, fully nitrogen-purged, was charged with 1,000 g of hexane, 60 g of butadiene, 40 g of styrene and 20 mmol of TMEDA. Subsequently, a small amount of n-butyllithium/hexane solution was put into the polymerization vessel as a scavenger for previously neutralizing impurities that would affect deactivation of a polymerization initiator. Further, an n-butyllithium/hexane solution (in which the content of n-butyllithium was 0.332 mmol) was added thereto, followed by polymerization reaction for three hours at 50°C. Then, 0.083 mmol of tetrachlorosilane was added to the resulting mixture. Subsequently, 1,500 mL of 1M isopropanol/hexane solution was added dropwise to the mixture to terminate the reaction. Thereafter, the polymerization solution was evaporated for 24 hours at room temperature and further dried for 24 hours at 80°C under reduced pressure, thereby producing an SBR2.

### Examples and Comparative Examples

According to the compounding formulations shown in Table 1 below, all chemicals, other than a vulcanizing agent and a vulcanization accelerator, were kneaded using a 1.7 L sealed Banbury mixer for five minutes up to a discharge temperature of 170°C to obtain a kneaded product. Then, the obtained kneaded product was kneaded again (remilled) at a discharge temperature of 150°C for four minutes by the Banbury mixer. Then, a vulcanizing agent and a vulcanization accelerator were added to the obtained kneaded product, and kneaded for 4 minutes up to 105°C using a biaxial open roll to obtain an unvulcanized rubber composition. The obtained unvulcanized rubber composition was extruded and molded into the shape of a tire tread by an extruder equipped with a base having a predetermined shape, and then laminated with other tire members to form an unvulcanized tire, which was then press-vulcanized at 170°C for 12 minutes to manufacture a test tire (size: 195/65R15).

The obtained test tires were subjected to the following evaluation. The results are shown in Table 1.

### <Abrasion Resistance>

The respective test tires were mounted on all wheels of a domestic FR vehicle with a displacement of 2,000cc, and after running a distance of 8,000 km, a groove depth of a tire tread portion was measured. Then, a running distance when the tire groove depth was reduced by 1 mm was measured. The result of each of the test tires is indicated by an index, assuming that a running distance when a tire groove of Comparative Example 1 was reduced by 1 mm is 100. It shows that the larger the index is, the better the abrasion resistance is.

### <Grip Performance>

The respective test tires were mounted on all wheels of a domestic FR vehicle with a displacement of 2,000cc, and the vehicle was actually run 10 times on a test course with a dry asphalt road surface. The stability of control at that time was evaluated by a test driver. The result of each of the test tires is indicated by an index, assuming that the stability of Comparative Example 1 is 100. It shows that the larger the index is, the higher the grip performance is.

**Table 1**

| | Examples | | Comparative Examples | | | |
|---|---|---|---|---|---|---|
| | 1 | 2 | 1 | 2 | 3 | 4 |

| Compounding amount (parts by mass) | | | | | | |
|---|---|---|---|---|---|---|
| SBR1 | 100 | 100 | 100 | - | - | - |
| SBR2 | - | - | - | 100 | 100 | 100 |
| Carbon black 1 | 95 | - | - | 95 | - | - |
| Carbon black 2 | - | 95 | - | - | 95 | - |
| Carbon black 3 | - | - | 95 | - | - | 95 |
| Naphthenic oil | 40 | 40 | 40 | 40 | 40 | 40 |
| Liquid polymer | 35 | 35 | 35 | 35 | 35 | 35 |
| Antioxidant | 2.5 | 2.5 | 2.5 | 2.5 | 2.5 | 2.5 |
| Wax | 1 | 1 | 1 | 1 | 1 | 1 |
| Stearic acid | 1.5 | 1.5 | 1.5 | 1.5 | 1.5 | 1.5 |
| Zinc oxide | 2 | 2 | 2 | 2 | 2 | 2 |
| Vulcanizing agent 1 | 1 | 1 | 1 | 1 | 1 | 1 |
| Vulcanizing agent 2 | 1.5 | 1.5 | 1.5 | 1.5 | 1.5 | 1.5 |
| Vulcanization accelerator 1 | 3 | 3 | 3 | 3 | 3 | 3 |
| Vulcanization accelerator 2 | 5 | 5 | 5 | 5 | 5 | 5 |
| Evaluation | | | | | | |
| Abrasion resistance | 133 | 117 | 100 | 67 | 75 | 79 |
| Grip performance | 122 | 139 | 100 | 117 | 122 | 122 |

It is seen from the results shown in Table 1 that the tires of the present disclosure having a tread composed of the specific rubber composition are excellent in abrasion resistance. In addition, it is considered that the grip performance was improved while maintaining the abrasion resistance by using 30 parts or more of the liquid SBR having a hydrogenation rate of 50% or more and a weight-average molecular weight of 30,000 or less in combination.

There is provided a tire being excellent in abrasion resistance. The tire comprises a tread composed of a rubber composition for the tread, and the rubber composition comprises 70 to 130 parts by mass of carbon black having a nitrogen adsorption specific surface area of 100 to 290 m²/g based on 100 parts by mass of a rubber component comprising a linear styrene-butadiene rubber having a styrene content of 35 to 45% by mass, a vinyl content of 35 to 45% by mass and a weight-average molecular weight of 1,000,000 to 1,400,000.

## Claims

1. A tire comprising a tread composed of a rubber composition for the tread, the rubber composition comprising 70 to 130 parts by mass of carbon black having a nitrogen adsorption specific surface area of 100 to 290 m²/g based on 100 parts by mass of a rubber component comprising a linear styrene-butadiene rubber having a styrene content of 35 to 45% by mass, a vinyl content of 35 to 45% by mass and a weight-average molecular weight of 1,000,000 to 1,400,000.

2. The tire of claim 1, wherein a viscosity of a toluene solution of 5% by mass of the linear styrene-butadiene rubber is 350 mPa·s or more.
